(19) Europäisches Patentamt
European Patent Office
Office européen des brevets

(11) **EP 4 128 521 B1**

(12) **FASCICULE DE BREVET EUROPEEN**

(45) Date de publication et mention
de la délivrance du brevet:
**15.10.2025 Bulletin 2025/42**

(21) Numéro de dépôt: **21732375.7**

(22) Date de dépôt: **25.03.2021**

(51) Classification Internationale des Brevets (IPC):
***H02P 21/00*** *(2016.01)*   ***H02P 11/04*** *(2006.01)*

(52) Classification Coopérative des Brevets (CPC):
**H02P 21/00; H02P 11/04**

(86) Numéro de dépôt international:
**PCT/FR2021/050518**

(87) Numéro de publication internationale:
**WO 2021/198594 (07.10.2021 Gazette 2021/40)**

(54) **PROCÉDÉ DE COMMANDE D'UN REDRESSEUR CONNECTÉ À UNE GÉNÉRATRICE ÉLECTRIQUE SYNCHRONE À AIMANTS PERMANENTS POUR FOURNIR UNE TENSION CONTINUE, PROGRAMME D'ORDINATEUR ET DISPOSITIF CORRESPONDANT**

VERFAHREN ZUR STEUERUNG EINES GLEICHRICHTERS, DER AN EINEN PERMANENT-MAGNET-SYNCHRONGENERATOR ANGESCHLOSSEN IST, UM EINE GLEICHSPANNUNG BEREITZUSTELLEN, ENTSPRECHENDE VORRICHTUNG UND COMPUTERPROGRAMM

METHOD FOR CONTROLLING A RECTIFIER CONNECTED TO A PERMANENT-MAGNET SYNCHRONOUS ELECTRIC GENERATOR TO PROVIDE A DIRECT VOLTAGE, CORRESPONDING DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2020 FR 2003370**

(43) Date de publication de la demande:
**08.02.2023 Bulletin 2023/06**

(73) Titulaires:
• **Safran**
  **75015 Paris (FR)**
• **Safran Electrical & Power**
  **31702 Blagnac (FR)**

(72) Inventeurs:
• **SABER, Christelle**
  **77550 MOISSY-CRAMAYEL (FR)**

• **ROUGIER, Florent**
  **77550 MOISSY-CRAMAYEL (FR)**
• **FLORESCU, Adrian**
  **77550 MOISSY-CRAMAYEL (FR)**
• **NADHERIA, Mallika**
  **77550 MOISSY-CRAMAYEL (FR)**

(74) Mandataire: **Gevers & Orès**
  **Immeuble le Palatin 2**
  **3 Cours du Triangle**
  **CS 80165**
  **92939 Paris La Défense Cedex (FR)**

(56) Documents cités:
**WO-A2-2014/173954     US-A1- 2013 106 368**
**US-A1- 2013 335 041**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de commande d'un redresseur connecté à une génératrice électrique synchrone à aimants permanents pour fournir une tension continue, et un programme d'ordinateur et un dispositif correspondant.

L'état de la technique comprend notamment les documents WO-A2-2014/173954, US-A1-2013/106368 et US-A1-2013/335041.

Pour commander un onduleur connecté entre un moteur électrique et une source de tension continue, il est connu d'utiliser un procédé de commande de l'onduleur, comportant :

- la détermination d'une première consigne d'une première composante vectorielle des courants de phase selon un premier axe d'un repère tournant lié à un rotor de la machine électrique, et d'une deuxième consigne d'une deuxième composante vectorielle des courants de phase selon un second axe du repère tournant, cette deuxième composante vectorielle des courants de phase étant destinée à entraîner un défluxage du rotor ; et

- la commande de l'onduleur à partir des première et deuxième consignes des composantes vectorielles des courants de phase.

Ce procédé connu utilise une mesure de la tension continue, une consigne de couple du moteur électrique et une mesure de la vitesse de rotation instantanée du rotor pour déterminer des consignes de courants de phase dans un repère d-q attaché au rotor. Plus précisément, il est prévu des tables donnant respectivement la consigne de courant direct et la consigne de courant de quadrature à partir de la mesure de la tension continue, de la consigne de couple et de la mesure de la vitesse de rotation instantanée.

Par ailleurs, pour les machines électrique fonctionnant en génératrice, il est connu d'utiliser un procédé de commande d'un redresseur connecté à des phases de la génératrice électrique synchrone à aimants permanents pour fournir une tension continue, les phases étant conçues pour être parcourues par des courants de phase lors d'un entraînement de la génératrice électrique, le procédé comportant :

- la détermination d'une première consigne d'une première composante vectorielle des courants de phase selon un premier axe d'un repère tournant lié à un rotor de la génératrice électrique, et d'une deuxième consigne d'une deuxième composante vectorielle des courants de phase selon un second axe du repère tournant, cette deuxième composante vectorielle des courants de phase étant destinée à entraîner un défluxage du rotor ; et

- la commande du redresseur à partir des première et deuxième consignes des composantes vectorielles des courants de phase.

Il peut ainsi être souhaité de prévoir un procédé de commande adapté à une machine électrique fonctionnant en génératrice et en particulier une machine multi-étoiles et multi-phasées, c'est-à-dire une machine qui comporte plusieurs étoiles et pour laquelle chaque étoile est au moins triphasée.

Il est donc proposé un procédé de commande d'un redresseur connecté à des phases de la génératrice électrique synchrone à aimants permanents pour fournir une tension continue, les phases étant conçues pour être parcourues par des courants de phase lors d'un entraînement de la génératrice électrique, le procédé comportant :

- la détermination d'une première consigne d'une première composante vectorielle des courants de phase selon un premier axe d'un repère tournant lié à un rotor de la génératrice électrique, et d'une deuxième consigne d'une deuxième composante vectorielle des courants de phase selon un second axe du repère tournant, cette deuxième composante vectorielle des courants de phase étant destinée à entraîner un défluxage du rotor ; et

- la commande du redresseur à partir des première et deuxième consignes des composantes vectorielles des courants de phase ;

la première consigne de la première composante vectorielle des courants de phase étant déterminée à partir d'une boucle de régulation externe conçue pour asservir une tension d'un bus continu ou pour réguler un courant d'une batterie connectée au bus continu,
ledit procédé étant caractérisé en ce qu'il comporte en outre :

- la détermination d'une première consigne théorique de la première composante vectorielle des courants de phase ;

- la détermination d'une deuxième consigne théorique de la deuxième composante vectorielle des courants de phase ; et
- si une amplitude d'une somme vectorielle des consignes des composantes vectorielles des courants de phase est inférieure ou égale à un seuil prédéfini, la fourniture des consignes théoriques en tant que consignes des composantes vectorielles des courants de phase ; et
- sinon, la limitation de la première consigne théorique et/ou de la deuxième consigne théorique de sorte qu'une amplitude d'une somme vectorielle des consignes théorique soit inférieure ou égale au seuil prédéfini, et la fourniture des consignes théoriques après limitation en tant que consignes des composantes vectorielles des courants de phase.

Ainsi, grâce à l'invention, la première consigne est déterminée à partir de la boucle de régulation externe, de sorte qu'il n'est pas nécessaire de connaître les caractéristiques de fonctionnement de la machine électrique. En particulier, il n'y a pas besoin d'utiliser une consigne de couple de la machine électrique ni une mesure de la vitesse de rotation instantanée du rotor, comme cela est nécessaire dans le procédé connu adapté au moteur électrique.

De façon optionnelle, la commande du redresseur à partir des première et deuxième consignes comporte :

- la détermination de consignes de tensions de phase de la génératrice électrique ; et

- la commande du redresseur à partir des consignes des tensions de phase ;

et la deuxième consigne de la deuxième composante vectorielle des courants de phase est déterminée à partir des consignes des tensions de phase.

De façon optionnelle également, la deuxième consigne de la deuxième composante vectorielle des courants de phase est prise égale à une constante prédéfinie.

De façon optionnelle également, la deuxième consigne de la deuxième composante vectorielle des courants de phase est déterminée à partir de la première consigne de la première composante vectorielle des courants de phase.

De façon optionnelle également, la deuxième consigne de la deuxième composante vectorielle des courants de phase est déterminée au moyen d'une table associant des valeurs de la deuxième consigne de la deuxième composante vectorielle des courants de phase à des valeurs de la première consigne de la première composante vectorielle des courants de phase.

De façon optionnelle également, la deuxième consigne de la deuxième composante vectorielle des courants de phase est déterminée au moyen d'une fonction associant des valeurs de la deuxième consigne de la deuxième composante vectorielle des courants de phase à des valeurs de la première consigne de la première composante vectorielle des courants de phase.

Il est également proposé un programme d'ordinateur téléchargeable depuis un réseau de communication et/ou enregistré sur un support lisible par ordinateur, caractérisé en ce qu'il comprend des instructions pour l'exécution des étapes d'un procédé de commande selon l'invention, lorsque ledit programme est exécuté sur un ordinateur

Il est également proposé un dispositif de commande d'un redresseur connecté à des phases d'une génératrice électrique synchrone à aimants permanents pour fournir une tension continue, les phases étant conçues pour être parcourues par des courants de phase lors d'un entraînement de la génératrice électrique, le dispositif de commande comportant :

- un module conçu pour déterminer une première consigne d'une première composante vectorielle des courants de phase selon un premier axe d'un repère tournant lié à un rotor de la génératrice électrique, et une deuxième consigne d'une deuxième composante vectorielle des courants de phase selon un second axe du repère tournant, cette deuxième composante vectorielle des courants de phase étant destinée à entraîner un défluxage du rotor ; et

- un module de commande du redresseur à partir des première et deuxième consignes des composantes vectorielles des courants de phase ;

caractérisé en ce que la première consigne de la première composante vectorielle des courants de phase est déterminée à partir d'une boucle de régulation externe conçue pour asservir une tension d'un bus continu ou pour réguler un courant d'une batterie connectée au bus continu,
et en ce que le module est conçu en outre pour :

- déterminer une première consigne théorique de la première composante vectorielle des courants de phase ;
- déterminer une deuxième consigne théorique de la deuxième composante vectorielle des courants de phase ; et
- si une amplitude d'une somme vectorielle des consignes des composantes vectorielles des courants de phase est inférieure ou égale à un seuil prédéfini, fournir des consignes théoriques en tant que consignes des composantes vectorielles des courants de phase ; et

- sinon, limiter la première consigne théorique et/ou de la deuxième consigne théorique de sorte qu'une amplitude d'une somme vectorielle des consignes théorique soit inférieure ou égale au seuil prédéfini, et fournir des consignes théoriques après limitation en tant que consignes des composantes vectorielles des courants de phase.

L'invention sera mieux comprise à l'aide de la description qui va suivre, donnée uniquement à titre d'exemple et faite en se référant aux dessins annexés dans lesquels :

[Fig. 1] la figure 1 est une représentation schématique d'une installation électrique selon un exemple non limitatif de mise en œuvre de l'invention, comportant un redresseur connecté à une génératrice électrique, ainsi qu'un dispositif de commande du redresseur,

[Fig. 2] la figure 2 est une représentation schématique de modules du dispositif de commande de la figure 1, selon un premier exemple de réalisation,

[Fig. 3] la figure 3 est un schéma-blocs illustrant des étapes d'un procédé de commande du redresseur de l'installation électrique de la figure 1 avec le dispositif de commande de la figure 2,

[Fig. 4] la figure 4 est une représentation schématique de modules du dispositif de commande de la figure 1, selon un deuxième exemple de réalisation,

[Fig. 5] la figure 5 est un schéma-blocs illustrant des étapes d'un procédé de commande du redresseur de l'installation électrique de la figure 1 avec le dispositif de commande de la figure 4,

[Fig. 6] la figure 6 est une représentation schématique de modules du dispositif de commande de la figure 1, selon un troisième exemple de réalisation,

[Fig. 7] la figure 7 est un schéma-blocs illustrant des étapes d'un procédé de commande du redresseur de l'installation électrique de la figure 1 avec le dispositif de commande de la figure 6,

[Fig. 8] la figure 8 est une représentation schématique de modules du dispositif de commande de la figure 1, selon un quatrième exemple de réalisation, et

[Fig. 9] la figure 9 est un schéma-blocs illustrant des étapes d'un procédé de commande du redresseur de l'installation électrique de la figure 1 avec le dispositif de commande de la figure 8.

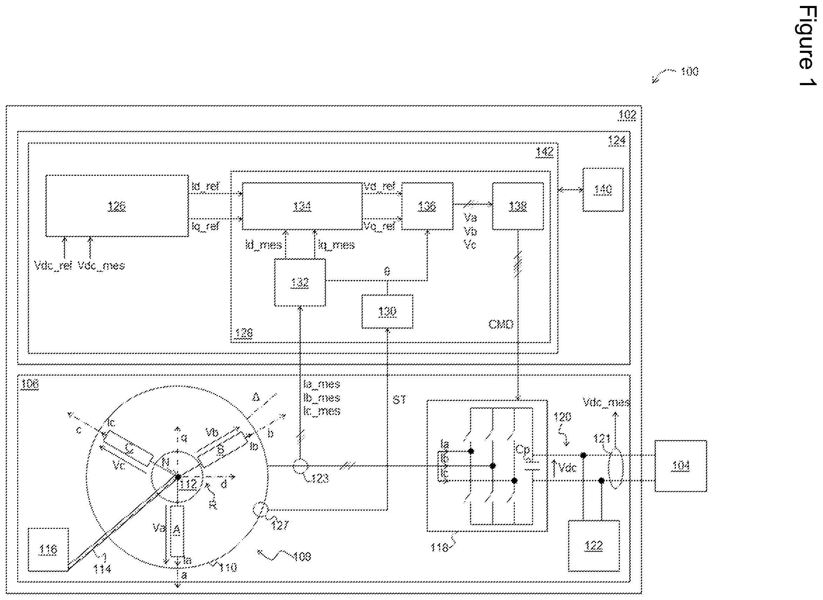

En référence à la **figure 1,** un exemple non limitatif d'installation électrique 100 mettant en œuvre l'invention va à présent être décrit.

L'installation électrique 100 est par exemple conçue pour faire partie d'un aéronef notamment à décollage et atterrissage verticaux ou VTOL (de l'anglais « vertical take-off and landing »).

L'installation électrique 100 comporte un système d'alimentation électrique 102 et une charge 104 alimentée par le système d'alimentation électrique 102. Par exemple, la charge 104 comporte divers équipements de l'aéronef.

Le système d'alimentation électrique 102 comporte une chaîne de génération électrique 106 comprenant tout d'abord une machine électrique 108 synchrone à aimants permanents, conçue pour fonctionner en tant que génératrice. La génératrice électrique 108 comprend un stator 110 et un rotor 112 conçu pour être entraîné en rotation relativement au stator 110, autour d'un axe de rotation Δ. Le rotor 112 comporte un ou plusieurs aimants permanents (non représenté) conçu pour générer un champ magnétique rotorique selon un axe d, dit axe direct, attaché au rotor 112. La génératrice électrique 108 présente en outre un arbre d'entrée 114 solidaire du rotor 112. Pour entraîner le rotor 112 en rotation, la chaîne de génération électrique 106 comporte en outre, dans l'exemple décrit, une turbine à gaz 116 connectée à l'arbre d'entrée 114.

Dans l'exemple décrit, la génératrice électrique 108 est multi-étoiles (en l'espèce deux étoiles) et chaque étoile est triphasée en étoile avec un neutre unique. Par soucis de clarté, une seule étoile est représentée sur la figure 1. L'homme du métier appréciera que l'invention s'applique, de manière générale, à une machine électrique synchrone à aimants permanents multi-étoiles (c'est-à-dire dont le nombre d'étoiles et supérieur ou égal à 1) et multi-phases (c'est-à-dire dont le nombre de phases par étoile est supérieur ou égal à 3). Le stator 110 comporte trois phases A, B, C dont les axes magnétiques sont orientés respectivement selon trois directions a, b, c transversales à l'axe de rotation Δ du rotor 112 et se croisant sur cet axe de rotation Δ. La génératrice électrique 108 est de préférence équilibrée de sorte que les trois directions a, b, c sont séparées les unes des autres d'un angle de 120°. Les trois phases A, B, C présentent des premières extrémités respectives connectées ensemble à un même point neutre N.

Lors de la rotation du rotor 112, les phases A, B, C sont conçues pour être respectivement parcourues par des courants de phase Ia, Ib, Ic générant respectivement des champs magnétiques selon respectivement les trois directions a, b, c.

Par ailleurs, en fonctionnement de la génératrice électrique 108, les phases A, B, C présentent des tensions de phase respectives par rapport au point neutre N, notées Va, Vb, Vc.

Comme cela sera décrit plus en détail par la suite, la génératrice électrique 108 est conçue pour être commandée vectoriellement. Ainsi, à chaque courant de phase Ia, Ib, Ic est associé un vecteur de courant de phase ayant une amplitude égale au courant de phase Ia, Ib, Ic et s'étendant selon la direction a, b, c de la phase A, B, C parcourue par ce courant de phase Ia, Ib, Ic. Les courants de phase Ia, Ib, Ic sont ainsi exprimés dans un repère formé des axes a, b, c, appelé repère abc. Les courants de phase Ia, Ib, Ic sont donc globalement représentés par un vecteur global de courant de phase égal à la somme vectorielle des vecteurs de courant de phase.

Pour simplifier la commande en utilisant des grandeurs sensiblement continues plutôt que directement les courants de phase Ia, Ib, Ic alternatifs, le vecteur global de courant de phase est exprimé dans un repère tournant R attaché au rotor 112 et comportant l'axe direct d et un axe de quadrature q, perpendiculaire à l'axe direct d dans le cas où le rotor 112 présente une seule paire de pôles nord-sud. De manière générale, l'invention s'applique à un rotor présentant un nombre de paire(s) de pôles supérieur ou égal à un. Ainsi, le vecteur global de courant de phase est exprimé par deux composantes : une composante directe Id selon l'axe direct d et une composante de quadrature Iq selon l'axe de quadrature q. De cette manière, les courants de phase Ia, Ib, Ic sont représentés par les composantes Id, Iq. Pour passer des courants de phase Ia, Ib, Ic aux composantes Id, Iq, la transformée de Park ou bien la transformée dqo peut être utilisée. Le passage des composantes Id, Iq aux courants de phase Ia, Ib, Ic se fait par exemple au moyen des transformées inverses.

De manière similaire, les tensions de phase Va, Vb, Vc dans le repère abc sont représentées par des composantes directe Vd et de quadrature Vq dans le repère tournant R.

Afin de convertir les tensions de phase Va, Vb, Vc en une tension pouvant être appliquée à la charge 104, la chaîne de génération électrique 106 comporte en outre un redresseur 118 conçu pour convertir les tensions alternatives de phase Va, Vb, Vc en une tension continue Vdc. Le redresseur 118 comporte, pour chaque tension de phase Va, Vb, Vc, un bras de commutation respectif comportant un interrupteur de côté haut et un interrupteur de côté bas connectés l'un à l'autre en un point milieu auquel est appliqué la tension de phase Va, Vb, Vc considérée et recevant le courant de phase Ia, Ib, Ic de cette phase A, B, C.

La chaîne de génération électrique 106 comporte en outre un bus 120 comportant deux lignes d'alimentation (respectivement positive et négative) entre lesquelles les bras de commutation du redresseur 118 sont connectés et distribuant la tension continue Vdc aux différents équipements formant la charge 104. Le bus 120 est généralement appelé bus HVDC (de l'anglais « High Voltage Direct Current ») et la tension continue Vdc qu'il transporte est généralement une haute tension, c'est-à-dire par exemple égale à 540 V (tension standard en aéronautique), voire même supérieure à 540 V. Pour lisser la tension continue Vdc, le redresseur 118 comporte de préférence une capacité Cp entre les lignes d'alimentation du bus 120.

Dans l'exemple décrit, la chaîne de génération électrique 106 comporte en outre une batterie 122 connectée au bus 120 pour participer à la génération de la tension continue Vdc. La batterie 122 présente un état de charge variant au cours du temps et influant donc la tension continue Vdc du bus 120.

Le redresseur 118 est parfois appelé redresseur actif dans la mesure où il est conçu pour être commandé, de sorte que la tension continue Vdc sur le bus 120 puisse être maintenue proche d'une consigne Vdc_ref malgré les variations de la charge de la batterie 122 et des tensions de phase Va, Vb, Vc. Cette consigne Vcd_ref peut être variée au cours du temps, en fonction des besoins des équipements formant la charge 104.

En outre le redresseur 118 peut aussi être utilisé pour maintenir un courant Ibat dans la batterie 122 sensiblement égal à une consigne de courant Ibat_ref quelles que soient les variations de la tension Vdc et des tensions de phase Va, Vb, Vc.

Ainsi, afin de piloter le redresseur 118, la chaîne de génération électrique 106 comporte en outre un dispositif de mesure 121 conçu pour fournir une mesure Vdc_mes de la tension continue Vdc, un dispositif de mesure 123 conçu pour fournir des mesures Ia_mes, Ib_mes, Ic_mes respectives des courants de phase Ia, Ib, Ic et un dispositif de mesure 127 conçu pour fournir une mesure ST d'un état de la génératrice électrique 108.

En particulier, le dispositif de mesure 127 peut être, par exemple, un capteur de position, comme par exemple un résolveur, qui mesure directement l'information de position angulaire du rotor 112 ou une génératrice synchrone montée sur l'arbre de la génératrice électrique 106 et tournant à vide. Dans ce cas, la position angulaire du rotor 112 est déduite de mesures des forces électromotrices à vide de cette dernière.

En outre, le système d'alimentation électrique 102 comporte un dispositif de commande 124 du redresseur 118 conçu plus précisément pour fournir des commandes de commutation CMD respectives aux interrupteurs du redresseur 118, afin de connecter chaque phase A, B, C alternativement à la ligne positive et à la ligne négative du bus 120.

Le dispositif de commande 124 comporte tout d'abord un module 126 conçu pour déterminer une consigne Id_ref de la composante directe Id des courants de phase Ia, Ib, Ic et une consigne Iq_ref de la composante de quadrature Iq des courants de phase Ia, Ib, Ic.

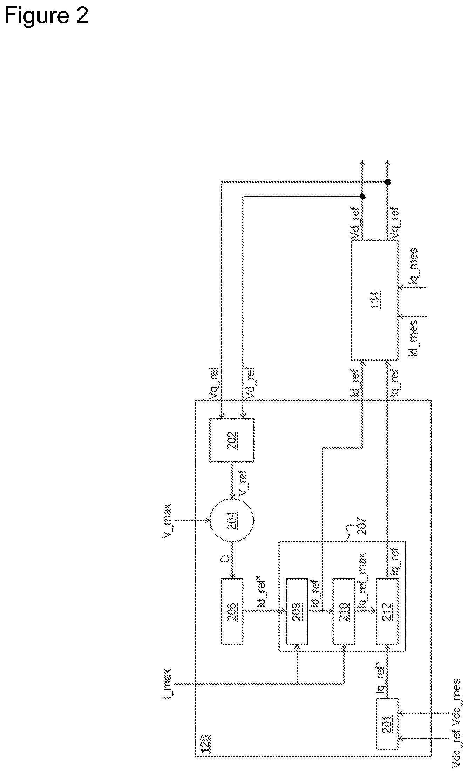

Différentes réalisations possible du module 126 seront décrites plus loin en référence aux figures 2, 4, 6 et 8.

Le dispositif de commande 124 comporte en outre un module 128 de commande du redresseur 118 à partir des consignes Iq_ref, Id_ref.

Le module 128 comporte un module 130 conçu pour déterminer une position angulaire θ du rotor 112 à partir de la mesure ST de l'état de la génératrice électrique 108.

Le module 128 comporte en outre un module 132 conçu pour convertir, à partir de la position angulaire θ du rotor 112, les mesures Ia_mes, Ib_mes, Ic_mes en mesures Id_mes, Iq_mes dans le repère tournant R. Le module 132 utilise par exemple la transformée de Park, la transformée dqo ou encore la transformée de Fortescue généralisée à un nombre de phases donné.

Le module 128 comporte en outre un module 134 conçu pour déterminer des consignes Vd_ref, Vq_ref des composantes directe et de quadrature Vd, Vq des tensions de phase Va, Vb, Vc, à partir des consignes Id_ref, Iq_ref et des mesures Id_mes, Iq_mes. Les consignes Vd_ref, Vq_ref forment donc une consigne vectorielle des tensions de phase Va, Vb, Vc. Le module 134 est par exemple conçu pour déterminer une erreur à partir d'une différence entre les consignes Id_ref, Iq_ref et les mesures Id_mes, Iq_mes et pour utiliser des correcteurs, par exemple des correcteurs proportionnel intégral, pour déterminer les consignes Vd_ref, Vq_ref à partir de l'erreur.

Le module 128 comporte en outre un module 136 conçu pour convertir, à partir de la position angulaire θ, les consignes Vd_ref, Vq_ref en consignes Va_ref, Vb_ref, Vc_ref dans le repère abc. Le module 136 utilise par exemple la transformée inverse de Park, la transformée inverse dqo ou encore la transformée de Fortescue généralisée à un nombre de phases donné.

Le module 128 comporte en outre un module 138 conçu pour déterminer les commandes de commutation CMD des interrupteurs du redresseur 118 à partir des consignes Va_ref, Vb_ref, Vc_ref.

Dans l'exemple décrit, le dispositif de commande 124 comporte un système informatique comportant une unité de traitement 140 (telle qu'un microprocesseur) et une mémoire 142 (telle qu'une mémoire principale) dans laquelle est enregistré un programme d'ordinateur contenant des instructions de programme d'ordinateur conçues pour être exécutées par l'unité de traitement 140. Ainsi, les modules décrits précédemment sont implémentés dans l'exemple décrit dans le programme d'ordinateur sous forme de modules logiciels.

Alternativement, tout ou partie des modules pourrait être implémenté sous forme de modules matériels, c'est-à-dire sous forme d'un circuit électronique, par exemple micro-câblé, ne faisant pas intervenir de programme d'ordinateur.

En référence à la **figure 2,** un premier exemple de réalisation du module 126 va à présent être décrit plus en détail.

Le module 126 comporte tout d'abord un module 201 conçu pour déterminer une consigne théorique Iq_ref* de la composante de quadrature Iq des courants de phase Ia, Ib, Ic, à partir de la mesure Vdc_mes et de la consigne Vdc_ref. Par exemple, la consigne théorique Iq_ref* est déterminée par l'équation :

[Math. 1]

$$Iq_{\_ref}{}^{*} = \left(V_{dc\_ref}{}^{2} - V_{dc\_mes}{}^{2}\right) \times \left(Kp + \frac{Ki}{s}\right)$$

où s est l'opérateur de Laplace, Kp un gain de l'action proportionnelle et Ki un gain de l'action intégrale.

Le module 126 comporte en outre un module 202 conçu pour déterminer une amplitude V_ref de la consigne vectorielle des tensions de phase. Dans l'exemple décrit où la consigne vectorielle des tensions de phase exprimée dans le repère tournant R par les composantes Vd_ref, Vq_ref, le module 202 est par exemple conçu pour déterminer l'amplitude V_ref selon l'équation suivante :

[Math. 2]

$$V_{\_ref} = \sqrt{Vd_{\_ref}{}^{2} + Vq_{\_ref}{}^{2}}$$

Le module 126 comporte en outre un module 204 conçu pour déterminer une différence D entre l'amplitude V_ref et un seuil V_max correspondant à une tension maximale admissible par la génératrice électrique 108 définie pour une tension continue mesurée Vdc_mes donnée et une stratégie de modulation donnée utilisée par le module 138. Le module 204 est par exemple conçu pour déterminer la différence D selon l'équation suivante :

[Math. 3]

$$D = V\_\max - V\_ref$$

Le module 126 comporte en outre un module 206 conçu pour recevoir la différence D et déterminer, à partir de cette différence D, une consigne théorique Id_ref* de la composante directe Id des courants de phase Ia, Ib, Ic.

Plus précisément, si cette différence D est négative, c'est-à-dire si l'amplitude V_ref est supérieure au seuil V_max, alors la génératrice électrique 108 doit être commandée en mode de défluxage et le module 206 est alors conçu pour fournir une consigne théorique Id_ref* non nulle destinée à entraîner un défluxage du rotor 112, c'est-à-dire à entraîner la génération d'un champ magnétique de défluxage selon l'axe direct d venant s'opposer au champ magnétique produit par le rotor 112 selon l'axe direct d. Dans l'exemple décrit, la génératrice électrique 108 est modélisée en convention moteur, de sorte que la consigne théorique Id_ref* est négative pour obtenir le champ magnétique de défluxage. Le module 206 utilise par exemple un correcteur proportionnel intégrateur pour déterminer la consigne théorique Id_ref*. En particulier, ce correcteur proportionnel intégrateur peut être appliqué à D selon l'équation :

[Math. 4]

$$I\_d_{ref}{}^{*} = D \times \left( Kp + \frac{Ki}{s} \right)$$

où s est l'opérateur de Laplace, Kp le gain de l'action proportionnelle et Ki le gain de l'action intégrale.

Si l'amplitude V_ref est inférieure ou égale au seuil prédéfini V_max (différence D positive ou nulle), alors la génératrice électrique 108 n'a pas besoin d'être commandée en mode de défluxage et le module 206 est alors conçu pour que la consigne théorique Id_ref* soit positive ou nulle.

Le module 126 comporte en outre un module 207 conçu pour déterminer les consignes Iq_ref, Id_ref en limitant si besoin la consigne théorique Iq_ref* et/ou la consigne théorique Id_ref*.

Plus précisément, le module 207 est tout d'abord conçu pour limiter la consigne théorique Id_ref* afin qu'elle ne risque pas d'entraîner la génération d'un champ magnétique selon l'axe direct d venant s'ajouter au champ magnétique produit par le rotor 112 selon l'axe direct d. Avec les conventions utilisées dans l'exemple décrit, le module 207 est conçu pour empêcher la consigne Id_ref d'être positive en limitant la consigne théorique Id_ref* à zéro.

Le module 207 est en outre conçu pour empêcher la consigne Iq_ref d'être positive en limitant la consigne théorique Iq_ref* à zéro. En effet, selon la convention adoptée, le fonctionnement en mode génératrice de la machine électrique nécessite un courant Iq négatif.

Le module 207 est en outre conçu pour limiter la consigne théorique Iq_ref* et/ou la consigne théorique Id_ref* de sorte que l'amplitude de leur somme vectorielle après limitation reste inférieure ou égale à un seuil I_max. Ce seuil I_max correspond par exemple à un courant maximum supporté par l'électronique de puissance, en particulier les interrupteurs du redresseur 118.

Le module 207 est ensuite conçu pour fournir les consignes théoriques Iq_ref*, Id_ref* après limitation en tant que consignes Iq_ref, Id_ref.

Dans l'exemple décrit, pour réaliser ces différentes limitations des consignes théoriques Iq_ref*, Id_ref*, le module 207 comporte tout d'abord un module 208 conçu pour limiter l'amplitude négative la consigne théorique Id_ref* au seuil -I_max et son amplitude positive à zéro. Ainsi, la consigne Id_ref est égale à la consigne théorique Id_ref* sauf lorsque, d'une part, l'amplitude de cette dernière passe sous le seuil -I_max, auquel cas la consigne Id_ref est égale à -I_max, et, d'autre part, la consigne théorique Id_ref* est supérieure à zéro, auquel cas la consigne Id_ref est égale à zéro. En particulier, lorsque le défluxage n'est pas nécessaire (différence D supérieure ou égale à zéro), la consigne Id_ref est nulle.

Le module 207 comporte en outre un module 210 conçu pour déterminer un seuil Iq_ref_max pour la consigne Iq_ref, à partir de la consigne Id_ref et du seuil I_max, par exemple selon l'équation :

[Math. 5]

$$Iq\_ref\_\max = \sqrt{I\_max^2 - Id\_ref^2}$$

Le module 207 comporte en outre un module 212 conçu pour limiter l'amplitude négative de la consigne théorique Iq_ref* au seuil -Iq_ref_max et son amplitude positive à zéro.

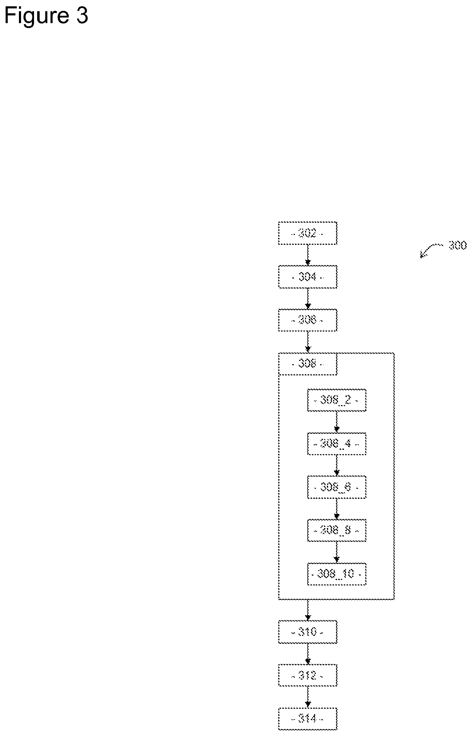

En référence à la figure 3, un premier exemple de procédé 300 de commande du redresseur 118 va à présent être décrit. Dans l'exemple décrit, le procédé 300 est mis en œuvre par le dispositif de commande 124, avec le module 126 de la figure 2. En outre, l'homme du métier appréciera que les étapes du procédé 300 décrit peuvent être exécutées dans un ordre différent de celui représenté à la figure 3 et peuvent être exécutées, par exemple, concomitamment.

Au cours d'une étape 302, le dispositif de commande 124 reçoit les mesures Vdc_mes, Ia_mes, Ib_mes, Ic_mes, ST et Ibat_mes.

Au cours d'une étape 304, le module 130 détermine l'angle de rotation θ du rotor 112 à partir de la mesure ST de l'état de la génératrice électrique 108.

Au cours d'une étape 306, le module 132 convertit, à partir de la position angulaire θ du rotor 112, les mesures Ia_mes, Ib_mes, Ic_mes en mesures Id_mes, Iq_ref dans le repère tournant R.

Au cours d'une étape 308, le module 126 détermine les consignes Iq_ref, Id_ref de courants de phase.

Pour cela, au cours d'une étape 308_2, le module 201 détermine la consigne théorique Iq_ref* à partir d'une boucle de régulation externe d'asservissement de la tension du bus 120 ou de régulation du courant de la batterie 122, c'est-à-dire, par exemple, à partir de la mesure Vdc_mes et de la consigne Vdc_ref de la tension continue Vdc ou de la mesure Ibat_mes du courant de batterie et de la consigne de courant batterie Ibat_ref.

Au cours d'une étape 308_4, le module 202 détermine l'amplitude V_ref de la consigne vectorielle des tensions de phase à partir des consignes Vq_ref, Vd_ref.

Au cours d'une étape 308_6, le module 204 détermine la différence D entre l'amplitude V_ref et le seuil V_max.

Au cours d'une étape 308_8, le module 206 détermine, à partir de la différence D, la consigne théorique Id_ref*.

Au cours d'une étape 308_10, le module 207 limite si besoin la consigne théorique Id_ref* et/ou la consigne Iq_ref* pour fournir les consignes Iq_ref, Id_ref. La valeur de courant Id nécessaire pour atteindre un point de fonctionnement donné est donc limitée ce qui se traduit par des amplitudes de courants Ia, Ib et Ic plus faibles et, par conséquent, moins de pertes thermiques dans l'électronique de puissance et la machine électrique.

Avantageusement, les consignes Iq_ref et Id_ref sont obtenues à l'étape 308 indépendamment de paramètres de fonctionnement de la génératrice électrique 108, en particulier indépendamment d'un couple et d'une vitesse de rotation du rotor 112 et sans utiliser de consigne de couple du rotor 112. En outre, de manière générale, les paramètres de fonctionnement de la génératrice électrique 108 peuvent désigner des paramètres électriques, comme par exemple, une matrice d'inductance, et des paramètres mécaniques, comme par exemple, la vitesse de rotation du rotor 112.

En outre, il sera apprécié que la consigne Id_ref est obtenue par une régulation en boucle fermée (« feedback » en anglais).

Au cours d'une étape 310, le module 134 détermine les consignes Vd_ref, Vq_ref à partir des consignes Id_ref, Iq_ref et des mesures Id_mes, Iq_mes.

Au cours d'une étape 312, le module 136 convertit les consignes Vd_ref, Vq_ref en consignes Va_ref, Vb_ref, Vc_ref dans le repère abc.

Au cours d'une étape 314, le module 138 détermine les commandes de commutation CMD et les fournit aux interrupteurs du redresseur 118, de sorte que la tension continue Vdc s'approche de la tension de référence Vdc_ref.

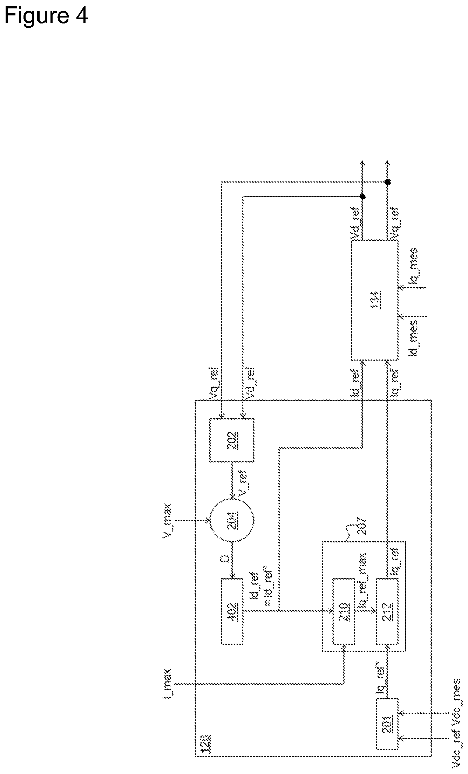

En référence à la **figure 4,** un deuxième exemple de réalisation du module 126 va à présent être décrit plus en détail.

Cet exemple est similaire à celui de la figure 2, si ce n'est que le module 206 est remplacé par un module 402 conçu pour fournir, lorsque la différence D est négative, c'est-à-dire lorsque l'amplitude V_ref est supérieure au seuil V_max, une consigne Id_ref égale à une constante prédéfinie, notée Id_ref°. Cette constante Id_ref° est choisie inférieure en valeur absolue au seuil I_max. Lorsque la différence D est positive ou nulle, le module 402 est conçu pour fournir la consigne Id_ref égale à zéro. Il sera apprécié que la différence D n'est utilisée que pour déterminer le besoin d'activer ou non le défluxage. Sa valeur précise n'est pas utilisée dans ce mode de réalisation, juste son signe. Ainsi, le module 204 pourrait fournir au module 402, à la place de la différence D, un binaire indiquant simplement l'activation ou non du défluxage.

Par ailleurs, avec le choix de la constante Id_ref° inférieure (en valeur absolue) au seuil I_max, le module 207 est simplifié et ne comporte plus le module 208. En outre, le module 207 ne limite si besoin que la consigne théorique Iq_ref*, et non la consigne Id_ref qui reste constante. Enfin, l'homme du métier appréciera que, dans le cas où les capteurs de courant Ia, Ib et Ic sont utilisés en convention récepteur, la constante Id_ref° est négative.

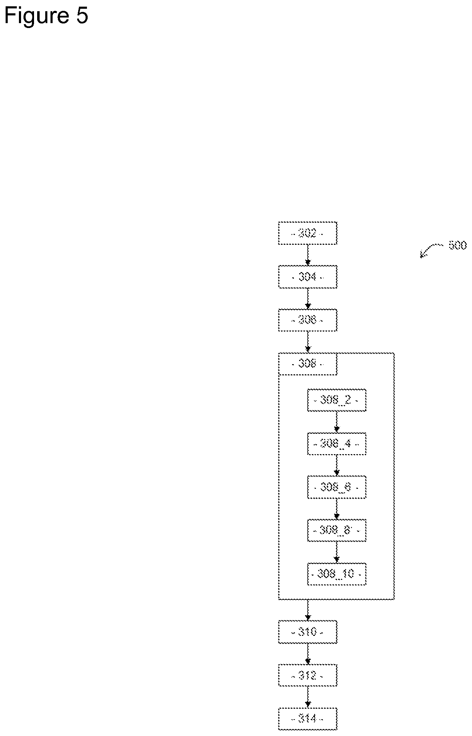

En référence à la **figure 5,** un deuxième exemple de procédé 500 de commande du redresseur 118 va à présent être décrit. Dans l'exemple décrit, le procédé 500 est mis en œuvre par le dispositif de commande 124, avec le module 126 de la figure 4.

Le procédé 500 est similaire au procédé 300, si ce n'est que l'étape 308_8 est remplacée par une étape 308_8' au cours de laquelle le module 206 fournit la consigne Id_ref égale à zéro ou bien à la constante Id_ref°, suivant le signe de la différence D.

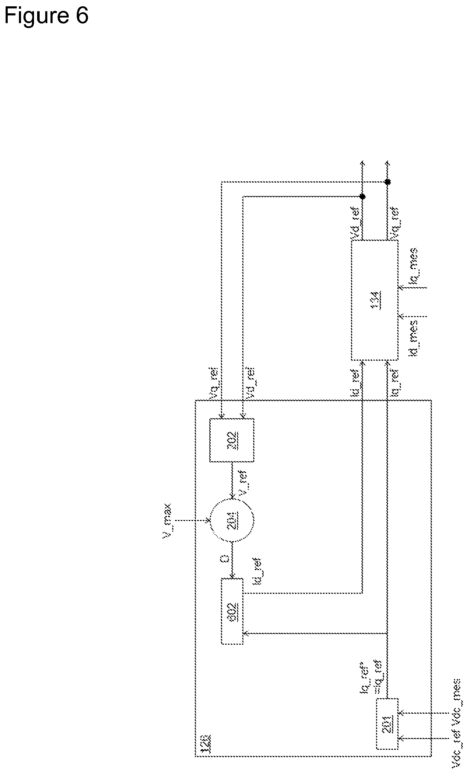

En référence à la **figure 6,** un troisième exemple de réalisation du module 126 va à présent être décrit plus en détail.

Dans ce troisième exemple, la consigne Id_ref est déterminée à partir de la consigne Iq_ref, selon une régulation prédictive (« feedforward » en anglais).

Plus précisément, les modules 206 et 207 sont remplacés par un module 602 conçu pour fournir, lorsque la différence D est négative, une consigne Id_ref déterminée au moyen d'une table associant des valeurs de consigne Id_ref à des valeurs de la consigne Iq_ref, telle que la table suivante :

[Tableau 1]

| Puissance active P [kW] | Iq_ref [A] | Id_ref [A] |
|---|---|---|
| $0 \leq P \leq -20$ | $0 \leq Iqref \leq -40$ | -30 |
| $-20 < P \leq -40$ | $-40 < Iqref \leq -75$ | -40 |
| $-40 < P \leq -60$ | $-75 < Iqref \leq -110$ | -50 |
| $-60 < P \leq -80$ | $-110 < Iqref \leq -140$ | -60 |
| $-80 < P \leq -90$ | $-140 < Iqref \leq -160$ | -75 |
| $-90 < P \leq -95$ | $-160 < Iqref \leq -178$ | -90 |

Ainsi, dans l'exemple décrit, des plages de valeurs contiguës de Iq_ref sont respectivement associées à des valeurs de Id_ref. Dans ce tableau, les consignes Iq_ref, Id_ref associées sont toutes choisies pour que l'amplitude de leur somme vectorielle soit inférieure à I_max.

En outre, dans le cas particulier d'une machine synchrone à pôles lisses, le courant Iq est directement proportionnel à la puissance active P et la plage de variation de la consigne en courant Iq_ref est ainsi directement déduite de la plage de variation de la puissance active.

Lorsque la différence D est positive ou nulle, le module 602 est conçu pour fournir la consigne Id_ref égale à zéro. À nouveau, seul le signe de la différence D est utilisé par le module 602.

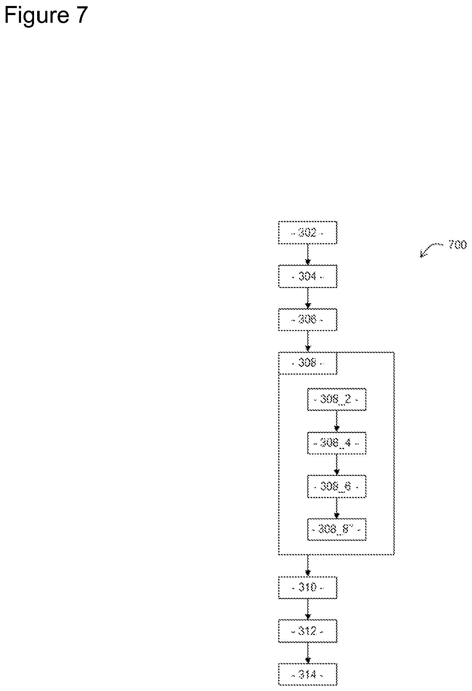

En référence à la **figure 7,** un troisième exemple de procédé 700 de commande du redresseur 118 va à présent être décrit. Dans l'exemple décrit, le procédé 700 est mis en œuvre par le dispositif de commande 124, avec le module 126 de la figure 6.

Le procédé 700 est similaire au procédé 500, si ce n'est que l'étape 308_8' est remplacée par une étape 308_8" au cours de laquelle le module 602 fournit la consigne Id_ref soit égale à zéro, soit à partir de la consigne Iq_ref et de la table d'association, suivant le signe de la différence D. Par ailleurs, l'étape 308_10 est supprimée car la limitation des consignes Iq_ref, Id_ref est prévue lors de l'établissement de la table d'association.

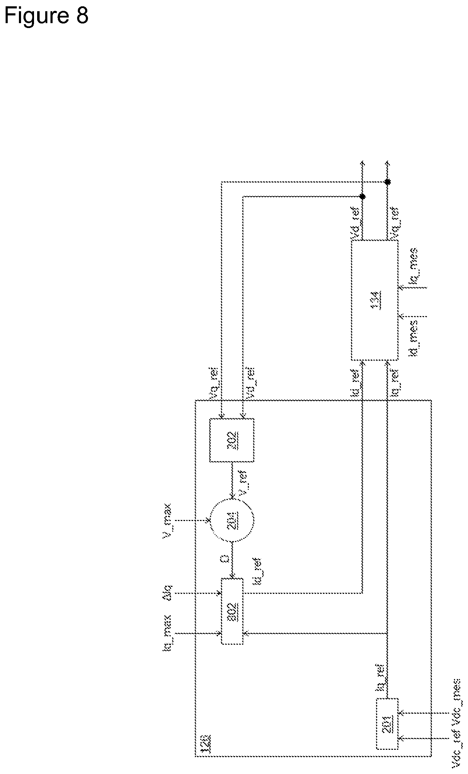

En référence à la **figure 8,** un quatrième exemple de réalisation du module 126 va à présent être décrit plus en détail.

Dans ce quatrième exemple, la consigne Id_ref est également déterminée à partir de la consigne Iq_ref, selon une régulation prédictive (« feedforward » en anglais).

Plus précisément, le module 602 est remplacé par un module 802 conçu pour fournir, lorsque la différence D est négative, une consigne Id_ref déterminée au moyen d'une fonction associant des valeurs de consigne Id_ref à des valeurs de la consigne Iq_ref. Par exemple, la fonction est donnée par l'équation suivante :

[Math. 6]

$$Id\_ref = \sqrt{(Iq\_max - \Delta Iq)^2 - Iq\_ref^2}$$

où Iq_max et ΔIq sont des paramètres prédéfinis tenant compte en particulier de I_max, de sorte que l'amplitude de la somme vectorielle des consignes Iq_ref et Id_ref soit inférieure à I_max.

Lorsque la différence D est positive ou nulle, le module 802 est conçu pour fournir la consigne Id_ref égale à zéro. À nouveau, seul le signe de la différence D est utilisé par le module 802.

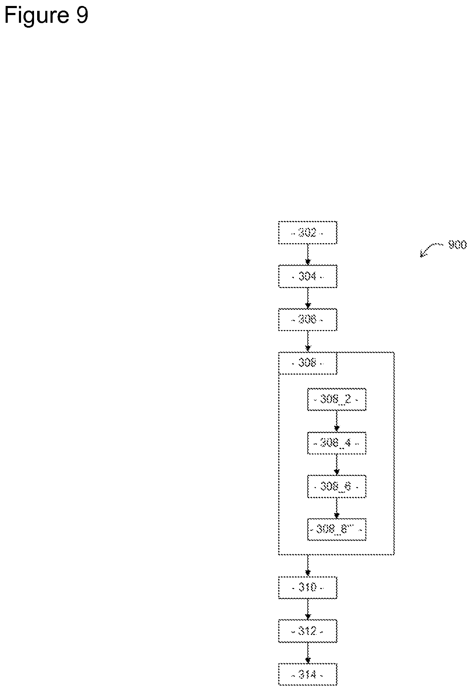

En référence à la **figure 9,** un quatrième exemple de procédé 900 de commande du redresseur 118 va à présent être décrit. Dans l'exemple décrit, le procédé 900 est mis en œuvre par le dispositif de commande 124, avec le module 126 de la figure 8.

Le procédé 900 est similaire au procédé 700, si ce n'est que l'étape 308_8" est remplacée par une étape 308_8‴ au cours de laquelle le module 802 fournit la consigne Id_ref soit égale à zéro, soit à partir de la consigne Iq_ref et de la fonction d'association, suivant le signe de la différence D.

Il apparaît clairement qu'un procédé de commande d'un redresseur tel que ceux décrits précédemment est bien adapté à une machine électrique fonctionnant en génératrice.

On notera par ailleurs que l'invention n'est pas limitée aux modes de réalisation décrits précédemment. Il apparaîtra en effet à l'homme de l'art que diverses modifications peuvent être apportées aux modes de réalisation décrits cidessus, à la lumière de l'enseignement qui vient de lui être divulgué.

En particulier, de manière générale, la génératrice électrique 108 peut présenter plus de trois phases, réparties en plusieurs étoiles ayant des neutres respectifs déconnectés les uns des autres. Par exemple, dans un mode de réalisation alternatif, la génératrice électrique 108 comporte trois étoiles de trois enroulements (phases) chacune, avec trois neutres respectifs déconnectées les uns des autres. Lorsque plusieurs étoiles sont présentes, un redresseur associé à un bus est prévu pour chaque étoile.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

**Revendications**

1. Procédé (300 ; 500 ; 700 ; 900) de commande d'un redresseur (118) connecté à des phases (A, B, C) d'une génératrice électrique (108) synchrone à aimants permanents pour fournir une tension continue (Vdc), les phases (A, B, C) étant conçues pour être parcourues par des courants de phase (la, Ib, Ic) lors d'un entraînement de la génératrice électrique (108), le procédé comportant :

   - la détermination (308) :

      • d'une première consigne (Iq_ref) d'une première composante vectorielle (Iq) des courants de phase (la, Ib, Ic) selon un premier axe (q) d'un repère tournant (R) lié à un rotor (112) de la génératrice électrique (108), et
      • d'une deuxième consigne (Id_ref) d'une deuxième composante vectorielle (Id) des courants de phase (la, Ib, Ic) selon un second axe (d) du repère tournant (R), cette deuxième composante vectorielle (Id) des courants de phase (la, Ib, Ic) étant destinée à entraîner un défluxage du rotor (112) ; et

   - la commande (310, 312, 314) du redresseur (118) à partir des première et deuxième consignes (Iq_ref, Id_ref) des composantes vectorielles (Iq, Id) des courants de phase (la, Ib, Ic) ;
   la première consigne (Iq_ref) de la première composante vectorielle (Iq) des courants de phase (la, Ib, Ic) étant déterminée à partir d'une boucle de régulation externe conçue pour asservir une tension d'un bus continu (120) ou pour réguler un courant d'une batterie (122) connectée au bus continu (120),
   ledit procédé (300) étant **caractérisé en ce qu'**il comporte en outre :

      - la détermination (308_2) d'une première consigne théorique (Iq_ref*) de la première composante vectorielle (Iq) des courants de phase (la, Ib, Ic) ;
      - la détermination (308_8) d'une deuxième consigne théorique (Id_ref*) de la deuxième composante vectorielle (Id) des courants de phase (la, Ib, Ic) ; et
      - si une amplitude d'une somme vectorielle des consignes (Iq_ref, Id_ref) des composantes vectorielles (Iq, Id) des courants de phase (la, Ib, Ic) est inférieure ou égale à un seuil (I_max) prédéfini, la fourniture (308_10) des consignes théoriques (Iq_ref*, Id_ref*) en tant que consignes (Iq_ref, Id_ref) des composantes vectorielles (Iq, Id) des courants de phase (la, Ib, Ic) ; et
      - sinon, la limitation de la première consigne théorique (Iq_ref*) et/ou de la deuxième consigne théorique (Id_ref*) de sorte qu'une amplitude d'une somme vectorielle des consignes théorique (Iq_ref*, Id_ref*) soit inférieure ou égale au seuil (I_max) prédéfini, et la fourniture (308_10) des consignes théoriques (Iq_ref*, Id_ref*) après limitation en tant que consignes (Iq_ref, Id_ref) des composantes vectorielles (Iq, Id) des courants de phase (la, Ib, Ic).

2. Procédé (300) selon la revendication 1, dans lequel la commande du redresseur (118) à partir des première et deuxième consignes (Iq_ref, Id_ref) comporte :

      - la détermination de consignes (Vq_ref, Vd_ref) de tensions de phase (Va, Vb, Vc) de la génératrice électrique (108) ; et
      - la commande du redresseur (118) à partir des consignes (Vq_ref, Vd_ref) des tensions de phase (Va, Vb, Vc) ;

   et dans lequel la deuxième consigne (Id_ref) de la deuxième composante vectorielle (Id) des courants de phase (la, Ib, Ic) est déterminée à partir des consignes (Vq_ref, Vd_ref) des tensions de phase (Va, Vb, Vc).

3. Procédé (500) selon la revendication 1, dans lequel la deuxième consigne (Id_ref) de la deuxième composante vectorielle (Id) des courants de phase (Ia, Ib, Ic) est prise égale à une constante prédéfinie.

4. Procédé (700 ; 900) selon la revendication 1, dans lequel la deuxième consigne (Id_ref) de la deuxième composante vectorielle (Id) des courants de phase (Ia, Ib, Ic) est déterminée à partir de la première consigne (Iq_ref) de la première composante vectorielle (Iq) des courants de phase (Ia, Ib, Ic).

5. Procédé (700) selon la revendication 4, dans lequel la deuxième consigne (Id_ref) de la deuxième composante vectorielle (Id) des courants de phase (Ia, Ib, Ic) est déterminée au moyen d'une table associant des valeurs de la deuxième consigne (Id_ref) de la deuxième composante vectorielle (Id) des courants de phase (Ia, Ib, Ic) à des valeurs de la première consigne (Iq_ref) de la première composante vectorielle (Iq) des courants de phase (Ia, Ib, Ic), la somme vectorielle de la deuxième consigne (Id_ref) et de la première consigne (Iq_ref) étant inférieure à un seuil prédéfini de courant maximum.

6. Procédé (900) selon la revendication 4, dans lequel la deuxième consigne (Id_ref) de la deuxième composante vectorielle (Id) des courants de phase (Ia, Ib, Ic) est déterminée au moyen d'une fonction associant des valeurs de la deuxième consigne (Id_ref) de la deuxième composante vectorielle (Id) des courants de phase (Ia, Ib, Ic) à des valeurs de la première consigne (Iq_ref) de la première composante vectorielle (Iq) des courants de phase (Ia, Ib, Ic), la somme vectorielle de la deuxième consigne (Id_ref) et de la première consigne (Iq_ref) étant inférieure à un seuil prédéfini de courant maximum.

7. Programme d'ordinateur téléchargeable depuis un réseau de communication et/ou enregistré sur un support lisible par ordinateur, **caractérisé en ce qu'**il comprend des instructions pour l'exécution des étapes d'un procédé de commande d'un redresseur selon l'une quelconque des revendications 1 à 6, lorsque ledit programme est exécuté sur un ordinateur

8. Dispositif (124) de commande d'un redresseur (118) connecté à des phases (A, B, C) d'une génératrice électrique (108) synchrone à aimants permanents pour fournir une tension continue (Vdc), les phases (A, B, C) étant conçues pour être parcourues par des courants de phase (Ia, Ib, Ic) lors d'un entraînement de la génératrice électrique (108), le dispositif de commande (124) comportant :

   - un module (126) conçu pour déterminer :

      • une première consigne (Iq_ref) d'une première composante vectorielle (Iq) des courants de phase (Ia, Ib, Ic) selon un premier axe (q) d'un repère tournant (R) lié à un rotor (112) de la génératrice électrique (108), et
      • une deuxième consigne (Id_ref) d'une deuxième composante vectorielle (Id) des courants de phase (Ia, Ib, Ic) selon un second axe (d) du repère tournant (R), cette deuxième composante vectorielle (Id) des courants de phase (Ia, Ib, Ic) étant destinée à entraîner un défluxage du rotor (112) ; et

   - un module (128) de commande du redresseur (118) à partir des première et deuxième consignes (Iq_ref, Id_ref) des composantes vectorielles (Iq, Id) des courants de phase (Ia, Ib, Ic) ;
   la première consigne (Iq_ref) de la première composante vectorielle (Iq) des courants de phase (Ia, Ib, Ic) étant déterminée à partir d'une boucle de régulation externe conçue pour asservir une tension d'un bus continu (120) ou pour réguler un courant d'une batterie (122) connectée au bus continu (120),
   ledit dispositif (124) étant **caractérisé en ce que** le module (126) est conçu en outre pour :

      - déterminer une première consigne théorique (Iq_ref*) de la première composante vectorielle (Iq) des courants de phase (Ia, Ib, Ic) ;
      - déterminer une deuxième consigne théorique (Id_ref*) de la deuxième composante vectorielle (Id) des courants de phase (Ia, Ib, Ic) ; et
      - si une amplitude d'une somme vectorielle des consignes (Iq_ref, Id_ref) des composantes vectorielles (Iq, Id) des courants de phase (Ia, Ib, Ic) est inférieure ou égale à un seuil (I_max) prédéfini, fournir des consignes théoriques (Iq_ref*, Id_ref*) en tant que consignes (Iq_ref, Id_ref) des composantes vectorielles (Iq, Id) des courants de phase (Ia, Ib, Ic) ; et
      - sinon, limiter la première consigne théorique (Iq_ref*) et/ou de la deuxième consigne théorique (Id_ref*) de sorte qu'une amplitude d'une somme vectorielle des consignes théorique (Iq_ref*, Id_ref*) soit inférieure ou égale au seuil (I_max) prédéfini, et fournir des consignes théoriques (Iq_ref*, Id_ref*) après limitation en tant que consignes (Iq_ref, Id_ref) des composantes vectorielles (Iq, Id) des courants de phase (Ia, Ib, Ic).

**Patentansprüche**

1. Steuerungsverfahren (300; 500; 700; 900) eines Gleichrichters (118), der mit Phasen (A, B, C) eines Synchronstromgenerators (108) mit Permanentmagneten verbunden ist, um eine Gleichspannung (Vdc) bereitzustellen, wobei die Phasen (A, B, C) konzipiert sind, um bei einem Antrieb des Stromgenerators (108) von den Strömen der Phase (Ia, Ib, Ic) durchlaufen zu werden, wobei das Verfahren umfasst:

   - die Bestimmung (308):

      - eines ersten Sollwerts (Iq_ref) einer ersten Vektorkomponente (Iq) der Ströme der Phase (Ia, Ib, Ic) gemäß einer ersten Achse (q) eines drehenden Fixpunktes (R), der mit einem Rotor (112) des Stromgenerators (108) verbunden ist, und
      - eines zweiten Sollwerts (Id_ref) einer zweiten Vektorkomponente (Id) der Ströme der Phase (Ia, Ib, Ic) gemäß einer zweiten Achse (d) des Fixpunktes (R), wobei diese zweite Vektorkomponente (Id) der Ströme der Phase (Ia, Ib, Ic) dazu bestimmt ist, eine Feldschwächung des Rotors (112) anzutreiben; und

   - die Steuerung (310, 312, 314) des Gleichrichters (118) ausgehend von dem ersten und zweiten Sollwert (Iq_ref, Id_ref) der Vektorkomponenten (Iq, Id) der Ströme der Phase (Ia, Ib, Ic);
   wobei der erste Sollwert (Iq_ref) der ersten Vektorkomponente (Iq) der Ströme der Phase (Ia, Ib, Ic) ausgehend von einem externen Regelkreis bestimmt wird, der konzipiert ist, um eine Spannung eines DC-Busses (120) zu unterdrücken oder um einen Strom einer Batterie (122) zu regeln, die mit dem DC-Bus (120) verbunden ist, wobei das Verfahren (300 **dadurch gekennzeichnet ist, dass** es weiter umfasst:

      - die Bestimmung (308_2) eines ersten theoretischen Sollwerts (Iq_ref*) der ersten Vektorkomponente (Iq) der Ströme der Phase (Ia, Ib, Ic);
      - die Bestimmung (308_8) eines zweiten theoretischen Sollwerts (Id_ref*) der zweiten Vektorkomponente (Id) der Ströme der Phase (Ia, Ib, Ic); und
      - wenn eine Amplitude einer Vektorsumme der Sollwerte (Iq_ref, Id_ref) der Vektorkomponenten (Iq, Id) der Ströme der Phase (Ia, Ib, Ic) kleiner als oder gleich einem vordefinierten Schwellenwert (I_max) ist, die Bereitstellung (308_10) der theoretischen Sollwerte (Iq_ref*, Id_ref*) als Sollwerte (Iq_ref, Id_ref) der Vektorkomponenten (Iq, Id) der Ströme der Phase (Ia, Ib, Ic); und
      - andernfalls die Begrenzung des ersten theoretischen Sollwerts (Iq_ref*) und/oder des zweiten theoretischen Sollwerts (Id_ref*) derart, dass eine Amplitude einer Vektorsumme der theoretischen Sollwerte (Iq_ref*, Id_ref*) kleiner als oder gleich dem vordefinierten Schwellenwert (I_max) ist, und die Bereitstellung (308_10) der theoretischen Sollwerte (Iq_ref*, Id_ref*) nach der Begrenzung als Sollwerte (Iq_ref, Id_ref) der Vektorkomponenten (Iq, Id) der Ströme der Phase (Ia, Ib, Ic).

2. Verfahren (300) nach Anspruch 1, wobei die Steuerung des Gleichrichters (118) ausgehend von dem ersten und zweiten Sollwert (Iq_ref, Id_ref) umfasst:

   - die Bestimmung von Sollwerten (Vq_ref, Vd_ref) von Phasenspannungen (Va, Vb, Vc) des Stromgenerators (108);
   - die Steuerung des Gleichrichters (118) ausgehend von Sollwerten (Vq_ref, Vd_ref) der Phasenspannungen (Va, Vb, Vc);
   - und wobei der zweite Sollwert (Id_ref) der zweiten Vektorkomponente (Id) der Ströme der Phase (Ia, Ib, Ic) ausgehend von den Sollwerten (Vq_ref, Vd_ref) der Phasenspannungen (Va, Vb, Vc) bestimmt wird.

3. Verfahren (500) nach Anspruch 1, wobei der zweite Sollwert (Id_ref) der zweiten Vektorkomponente (Id) der Ströme der Phase (Ia, Ib, Ic) als gleich einer vordefinierten Konstante genommen wird.

4. Verfahren (700; 900) nach Anspruch 1, wobei der zweite Sollwert (Id_ref) der zweiten Vektorkomponente (Id) der Ströme der Phase (Ia, Ib, Ic) ausgehend von dem ersten Sollwert (Iq_ref) der ersten Vektorkomponente (Id) der Ströme der Phase (Ia, Ib, Ic) bestimmt wird.

5. Verfahren (700) nach Anspruch 4, wobei der zweite Sollwert (Id_ref) der zweiten Vektorkomponente (Id) der Ströme der Phase (Ia, Ib, Ic) mittels einer Tabelle bestimmt wird, die die Werte des zweiten Sollwerts (Id_ref) der zweiten Vektorkomponente (Id) der Ströme der Phase (Ia, Ib, Ic) mit den Werten des ersten Sollwerts (Iq_ref) der ersten Vektorkomponente (Id) der Ströme der Phase (Ia, Ib, Ic) assoziiert, wobei die Vektorsumme der zweiten Vektorkomponente (Id) und der ersten Vektorkomponente (Id) kleiner als ein vordefinierter maximaler Stromschwellenwert ist.

6. Verfahren (900) nach Anspruch 4, wobei der zweite Sollwert (Id_ref) der zweiten Vektorkomponente (Id) der Ströme der Phase (Ia, Ib, Ic) mittels einer Funktion bestimmt wird, die die Werte des zweiten Sollwerts (Id_ref) der zweiten Vektorkomponente (Id) der Ströme der Phase (Ia, Ib, Ic) mit den Werten des ersten Sollwerts (Iq_ref) der ersten Vektorkomponente (Id) der Ströme der Phase (Ia, Ib, Ic) assoziiert, wobei die Vektorsumme der zweiten Vektorkomponente (Id) und der ersten Vektorkomponente (Id) kleiner als ein vordefinierter maximaler Stromschwellenwert ist.

7. Computerprogramm, das von einem Kommunikationsnetzwerk herunterladbar und/oder auf einem computerlesbaren Träger aufgezeichnet ist, **dadurch gekennzeichnet, dass** es Anweisungen für die Ausführung der Schritte eines Steuerungsverfahrens eines Gleichrichters nach einem der Ansprüche 1 bis 6, wenn das Programm auf einem Computer ausgeführt wird, umfasst.

8. Steuerungsvorrichtung (124) eines Gleichrichters (118), der mit Phasen (A, B, C) eines Synchronstromgenerators (108) mit Permanentmagneten verbunden ist, um eine Gleichspannung (Vdc) bereitzustellen, wobei die Phasen (A, B, C) konzipiert sind, um bei einem Antrieb des Stromgenerators (108) von den Strömen der Phase (Ia, Ib, Ic) durchlaufen zu werden, wobei die Steuerungsvorrichtung (124) umfasst:

   - ein Modul (126), konzipiert zum Bestimmen:

      - eines ersten Sollwerts (Iq_ref) einer ersten Vektorkomponente (Iq) der Ströme der Phase (Ia, Ib, Ic) gemäß einer ersten Achse (q) eines drehenden Fixpunktes (R), der mit einem Rotor (112) des Stromgenerators (108) verbunden ist, und
      - eines zweiten Sollwerts (Id_ref) einer zweiten Vektorkomponente (Id) der Ströme der Phase (Ia, Ib, Ic) gemäß einer zweiten Achse (d) des Fixpunktes (R), wobei diese zweite Vektorkomponente (Id) der Ströme der Phase (Ia, Ib, Ic) dazu bestimmt ist, eine Feldschwächung des Rotors (112) anzutreiben; und

   - ein Steuerungsmodul (128) des Gleichrichters (118) ausgehend von dem ersten und zweiten Sollwert (Iq_ref, Id_ref) der Vektorkomponenten (Iq, Id) der Ströme der Phase (Ia, Ib, Ic);
   wobei der erste Sollwert (Iq_ref) der ersten Vektorkomponente (Iq) der Ströme der Phase (Ia, Ib, Ic) ausgehend von einem externen Regelkreis bestimmt wird, der konzipiert ist, um eine Spannung eines DC-Busses (120) zu unterdrücken oder um einen Strom einer Batterie (122) zu regeln, die mit dem DC-Bus (120) verbunden ist, wobei die Vorrichtung (124) **dadurch gekennzeichnet ist, dass** das Modul (126) weiter konzipiert ist zum:

      - Bestimmen eines ersten theoretischen Sollwerts (Iq_ref*) der ersten Vektorkomponente (Iq) der Ströme der Phase (Ia, Ib, Ic);
      - Bestimmen eines zweiten theoretischen Sollwerts (Id_ref*) der zweiten Vektorkomponente (Id) der Ströme der Phase (Ia, Ib, Ic); und
      - wenn eine Amplitude einer Vektorsumme der Sollwerte (Iq_ref, Id_ref) der Vektorkomponenten (Iq, Id) der Ströme der Phase (Ia, Ib, Ic) kleiner als oder gleich einem vordefinierten Schwellenwert (I_max) ist, Bereitstellen der theoretischen Sollwerte (Iq_ref*, Id_ref*) als Sollwerte (Iq_ref, Id_ref) der Vektorkomponenten (Iq, Id) der Ströme der Phase (Ia, Ib, Ic); und
      - andernfalls Begrenzen des ersten theoretischen Sollwerts (Iq_ref*) und/oder des zweiten theoretischen Sollwerts (Id_ref*) derart, dass eine Amplitude einer Vektorsumme der theoretischen Sollwerte (Iq_ref*, Id_ref*) kleiner als oder gleich dem vordefinierten Schwellenwert (I_max) ist, und Bereitstellen der theoretischen Sollwerte (Iq_ref*, Id_ref*) nach der Begrenzung als Sollwerte (Iq_ref, Id_ref) der Vektorkomponenten (Iq, Id) der Ströme der Phase (Ia, Ib, Ic).

**Claims**

1. A method (300; 500; 700; 900) for controlling a rectifier (118) connected to phases (A, B, C) of a synchronous electric generator (108) with permanent magnets to provide a direct current voltage (Vdc), the phases (A, B, C) being designed to have phase currents (Ia, Ib, Ic) flowing through them when the electric generator (108) is driven, the method comprising:

- determining (308):

  ○ a first setpoint (Iq_ref) of a first vector component (Iq) of the phase currents (Ia, Ib, Ic) along a first axis (q) of a rotating reference frame (R) linked to a rotor (112) of the electric generator (108), and
  ○ a second setpoint (Id_ref) of a second vector component (Id) of the phase currents (Ia, Ib, Ic) along a second axis (d) of the rotating reference frame (R), this second vector component (Id) of the phase currents (Ia, Ib, Ic) being intended to drive a defluxing of the rotor (112); and

- controlling (310, 312, 314) the rectifier (118) from the first and second setpoints (Iq_ref, Id_ref) of the vector components (Iq, Id) of the phase currents (Ia, Ib, Ic);
the first setpoint (Iq_ref) of the first vector component (Iq) of the phase currents (Ia, Ib, Ic) being determined from an external feedback loop designed to feedback-control a voltage of a direct current bus (120) or to regulate a current from a battery (122) connected to the direct current bus (120),
said method (300) being **characterised in that** it further comprises:

  - determining (308_2) a first theoretical setpoint (Iq_ref*) of the first vector component (Iq) of the phase currents (Ia, Ib, Ic);
  - determining (308_8) a second theoretical setpoint (Id_ref*) of the second vector component (Id) of the phase currents (Ia, Ib, Ic); and
  - if a magnitude of a vector sum of the setpoints (Iq_ref, Id_ref) of the vector components (Iq, Id) of the phase currents (Ia, Ib, Ic) is less than or equal to a predefined threshold (I_max), providing (308_10) the theoretical setpoints (Iq_ref*, Id_ref*) as setpoints (Iq_ref, Id_ref) of the vector components (Iq, Id) of the phase currents (Ia, Ib, Ic); and
  - otherwise, limiting the first theoretical setpoint (Iq_ref*) and/or the second theoretical setpoint (Id_ref*) so that a magnitude of a vector sum of the theoretical setpoints (Iq_ref*, Id_ref*) is less than or equal to the predefined threshold (I_max), and providing (308_10) the theoretical setpoints (Iq_ref*, Id_ref*) after limiting the vector components (Iq, Id) of the phase currents (Ia, Ib, Ic) as setpoints (Iq_ref, Id_ref).

2. The method (300) according to claim 1, wherein the control of the rectifier (118) from the first and second setpoints (Iq_ref, Id_ref) comprises:

   - determining setpoints (Vq_ref, Vd_ref) of phase voltages (Va, Vb, Vc) of the electric generator (108); and
   - controlling the rectifier (118) from the setpoints (Vq_ref, Vd_ref) of the phase voltages (Va, Vb, Vc);

   and wherein the second setpoint (Id_ref) of the second vector component (Id) of the phase currents (Ia, Ib, Ic) is determined from the setpoints (Vq_ref, Vd_ref) of the phase voltages (Va, Vb, Vc).

3. The method (500) according to claim 1, wherein the second setpoint (Id_ref) of the second vector component (Id) of the phase currents (Ia, Ib, Ic) is set equal to a predefined constant.

4. The method (700; 900) according to claim 1, wherein the second setpoint (Id_ref) of the second vector component (Id) of the phase currents (Ia, Ib, Ic) is determined from the first setpoint (Iq_ref) of the first vector component (Iq) of the phase currents (Ia, Ib, Ic).

5. The method (700) according to claim 4, wherein the second setpoint (Id_ref) of the second vector component (Id) of the phase currents (Ia, Ib, Ic) is determined by means of a table associating values of the second setpoint (Id_ref) of the second vector component (Id) of the phase currents (Ia, Ib, Ic) to values of the first setpoint (Iq_ref) of the first vector component (Iq) of the phase currents (Ia, Ib, Ic), the vector sum of the second setpoint (Id_ref) and the first setpoint (Iq_ref) being below a predefined maximum current threshold.

6. The method (900) according to claim 4, wherein the second setpoint (Id_ref) of the second vector component (Id) of the phase currents (Ia, Ib, Ic) is determined by means of a function associating values of the second setpoint (Id_ref) of the second vector component (Id) of the phase currents (Ia, Ib, Ic) to values of the first setpoint (Iq_ref) of the first vector component (Iq) of the phase currents (Ia, Ib, Ic), the vector sum of the second setpoint (Id_ref) and the first setpoint (Iq_ref) being below a predetermined maximum current threshold.

7. A computer program downloadable from a communication network and/or stored on a computer-readable medium, **characterised in that** it comprises instructions for executing the steps of a method for controlling a rectifier according to any one of claims 1 to 6, when said program is executed on a computer

8. A device (124) for controlling a rectifier (118) connected to phases (A, B, C) of a synchronous electric generator (108) with permanent magnets in order to provide a direct current voltage (Vdc), the phases (A, B, C) being designed to have phase currents (Ia, Ib, Ic) flowing through them when the electric generator (108) is driven, the control device (124) comprising:

- a module (126) designed to determine:

   ∘ a first setpoint (Iq_ref) of a first vector component (Iq) of the phase currents (Ia, Ib, Ic) along a first axis (q) of a rotating reference frame (R) linked to a rotor (112) of the electric generator (108), and
   ∘ a second setpoint (Id_ref) of a second vector component (Id) of the phase currents (Ia, Ib, Ic) along a second axis (d) of the rotating reference frame (R), this second vector component (Id) of the phase currents (Ia, Ib, Ic) being intended to drive a defluxing of the rotor (112); and

- a module (128) for controlling the rectifier (118) on the basis of the first and second setpoints (Iq_ref, Id_ref) of the vector components (Iq, Id) of the phase currents (Ia, Ib, Ic);
the first setpoint (Iq_ref) of the first vector component (Iq) of the phase currents (Ia, Ib, Ic) is determined from an external feedback loop designed to feedback-control a voltage of a direct current bus (120) or to regulate a current from a battery (122) connected to the direct current bus (120),
said device (124) being **characterised in that** the module (126) is further designed for:

   - determining a first theoretical setpoint (Iq_ref*) of the first vector component (Iq) of the phase currents (Ia, Ib, Ic);
   - determining a second theoretical setpoint (Id_ref*) of the second vector component (Id) of the phase currents (Ia, Ib, Ic); and
   - if a magnitude of a vector sum of the setpoints (Iq_ref, Id_ref) of the vector components (Iq, Id) of the phase currents (Ia, Ib, Ic) is less than or equal to a predefined threshold (I_max), providing theoretical setpoints (Iq_ref*, Id_ref*) as the setpoints (Iq_ref, Id_ref) of the vector components (Iq, Id) of the phase currents (Ia, Ib, Ic); and
   - otherwise, limiting the first theoretical setpoint (Iq_ref*) and/or the second theoretical setpoint (Id_ref*) so that a magnitude of a vector sum of the theoretical setpoints (Iq_ref*, Id_ref*) is less than or equal to the predefined threshold (I_max), and providing theoretical setpoints (Iq_ref*, Id_ref*) after limiting the vector components (Iq, Id) of the phase currents (Ia, Ib, Ic) as setpoints (Iq_ref, Id_ref).

Figure 1

Figure 2

# Figure 3

Figure 4

# Figure 5

# Figure 6

Figure 7

Figure 8

Figure 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014173954 A2
- US 2013106368 A1
- US 2013335041 A1